**Europäisches Patentamt**

**European Patent Office**

**Office européen des brevets**

(19)

(11) Veröffentlichungsnummer : **0 204 757**
**B1**

(12) **EUROPÄISCHE PATENTSCHRIFT**

(45) Veröffentlichungstag der Patentschrift :
07.03.90

(51) Int. Cl.⁵ : **G 03 B 23/02**

(21) Anmeldenummer : 85906057.6

(22) Anmeldetag : 12.11.85

(86) Internationale Anmeldenummer :
PCT/EP 85/00617

(87) Internationale Veröffentlichungsnummer :
WO/8603031 (22.05.86 Gazette 86/11)

(54) VORRICHTUNG ZUM ZYKLISCHEN UMSCHICHTEN EINES STAPELS RECHTECKIGER ODER QUADRATISCHER BLÄTTER.

(30) Priorität : 13.11.84 DE 3441456

(43) Veröffentlichungstag der Anmeldung :
17.12.86 Patentblatt 86/51

(45) Bekanntmachung des Hinweises auf die Patenterteilung : 07.03.90 Patentblatt 90/10

(84) Benannte Vertragsstaaten :
AT BE CH DE FR GB IT LI NL SE

(56) Entgegenhaltungen :
EP—A— 0 113 057
DE—A— 3 014 394
FR—A— 2 403 207

(73) Patentinhaber : **Licinvest AG**
**Hartbertstrasse 9**
**CH-7002 Chur (CH)**

(72) Erfinder : **ACKERET, Peter**
**Allmendstrasse 18**
**CH-8700 Küsnacht (CH)**

(74) Vertreter : **Röhl, Wolf Horst, Dipl.-Phys., Dr. et al**
**Dipl.-Ing. K. Sparing Dipl.-Phys. Dr. W.H. Röhl Rethelstrasse 123**
**D-4000 Düsseldorf 1 (DE)**

## Beschreibung

Die Erfindung betrifft eine Vorrichtung zum zyklischen Umschichten eines Stapels rechteckiger oder quadratischer Blätter oder einen sogenannten « Bildwechsler ».

Bildwechsler sind aus den US-Patentschriften 4 238 898, 4 238 899, 4 241 528, 4 241 529, 4 245 417, 4 259 802 und 4 376 348 bekannt. Ihnen allen liegt das Prinzip zugrunde, daß ein Stapel von Bildern, wobei insbesondere an Fotoabzüge zu denken ist, von zwei relativ zueinander verschieblichen Rahmenteilen aufgenommen ist, von denen eines ein Betrachtungsfenster aufweisen kann. Jeweils bei einem vollständigen Bewegungszyklus der Rahmenteile — das heißt vollständig auseinanderziehen und wieder vollständig zusammenschieben — wird ein Bild an einem Stapelende abgenommen und am anderen Stapelende wieder zugefügt. Hierfür weisen die Bildwechsler die folgenden Komponenten auf :

Eine Trenneinrichtung löst ein Einzelbild vom Stapel ;

eine Zufuhreinrichtung führt der Trenneinrichtung Bilder zu ;

eine Halteeinrichtung hält das vom Stapel abgetrennte Einzelbild in einem der Rahmenteile, während der Reststapel im anderen Rahmenteil gehalten wird ;

eine Leiteinrichtung führt das abgetrennte Einzelbild so, daß es auf die andere Seite des Reststapels gelangt.

In den genannten Druckschriften wird die Zufuhr- und Halteeinrichtung von einunddemselben Element, nämlich einem an dem zu vereinzelnden Bild flächig angreifenden Haftbelag, gebildet. Damit sollte ein Nachteil älterer Vorschläge behoben werden, bei denen als Zufuhr- und Halteelement ein Haken oder eine Leiste vorgesehen waren, die an der der Trenneinrichtung abgewandten Kante des Stapels angreifen. Solche Blattwechsler sind für kartenartige Blätter relativ großer Steife brauchbar, und ihre Herstellung ist kostengünstig möglich. Sind jedoch die zu wechselnden Blätter Fotoabzüge, welche nur etwa 0,25 mm dick sind und noch dazu stark zum Aneinanderhaften neigen, so kann eine nur flächig angreifende Haftbelag-Zufuhreinrichtung versagen. Ein Haken- oder Leistenmitnehmer dagegen kann zwar die erforderlichen Scherkräfte übertragen, hat jedoch — wenn er auch als Halteeinrichtung verwendet wird — das Risiko, daß während des Auseinanderziehens der Rahmenteile das Einzelblatt vom Haken oder der Leiste abgleitet.

Aufgabe der Erfindung ist es, eine zuverlässig arbeitende und preisgünstig herstellbare Vorrichtung der eingangs genannten Gattung zu schaffen.

Bei einer Vorrichtung mit den im Oberbegriff des unabhängigen Patentanspruchs genannten Merkmalen wird dieser Aufgabe durch die in seinem Kennzeichen definierten Merkmale gelöst.

Das Konzept der Erfindung läßt sich in verschiedenster Weise verwirklichen. Insbesondere kann man erste Halteeinrichtungen unterschiedlicher Bauart verwenden, ebenso lassen sich die Trenneinrichtung und die Leiteinrichtung vielfältig abwandeln.

Eine Reihe von konstruktiven Ausführungen des Konzepts sind in den beigefügten Zeichnungen dargestellt und werden nachstehend im einzelnen erläutert.

Die Zeichnungen sind weitgehend schematisiert und auf das für jeden Einzelfall wesentliche oder von vorhergehenden Zeichnungen abweichende beschränkt. Hinsichtlich der Gesamtfunktion eines Blattwechslers kann auf die eingangs genannten Druckschriften verwiesen werden.

Die Fig. 1-10 zeigen verschiedene Ausführungsformen von Blattwechslern, bei denen ein haken- oder leistenartiger Mitnehmer mit unterschiedlichen Haltereinrichtungen kombiniert ist.

Figuren 11 bis 13 zeigen abweichend gestaltete Haken- oder Leistenmitnehmer.

Figuren 14 bis 28 stellen Halterichtungen dar, die mit den vorbeschriebenen Mitnehmern kompatibel und kombinierbar sind.

Figuren 29 bis 45 zeigen Details von Leiteinrichtungen, die mit dem erfindungsgemäßen Konzept kompatibel und kombinierbar sind.

Fig. 46 und 47 schließlich zeigen in Teildraufsicht bzw. in Teilperspektive ein wichtiges Detail aus einem bevorzugten Ausführungsbeispiel.

Der Fachmann erkennt aus den Figuren ohne weiteres, um welche Art der Darstellung — Längsschnitt oder Querschnitt, Teilansicht etc. — es sich handelt ; wo dies nicht ohne weiteres möglich ist, wird die Art der Darstellung bei der Figur selbst angegeben.

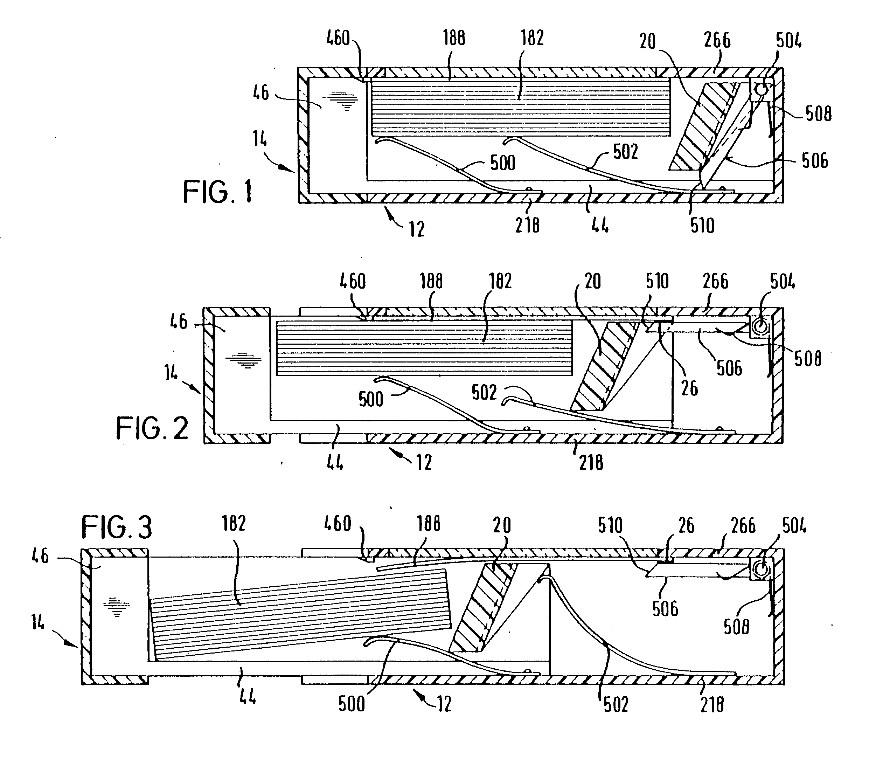

Fig. 1 bis 3 beziehen sich auf ein Ausführungsbeispiel. Sie sind weitgehend schematisiert und auf das Wesentliche beschränkt.

Das erste Rahmenteil ist als Gehäuse 12 ausgebildet, das zweite Rahmenteil als Schieber 14. An der Deckwand des Gehäuses 12 ist ein Mitnehmer in Form einer Leiste oder eines Hakens 460 angebracht, zum Beispiel angeformt, und die Längsholme 44 des Schiebers sind einerseits durch dessen Frontblocks 46, andererseits durch einen Separatorsteg 20 quer miteinander verbunden. An der Gehäusebodenwand 268 ist eine erste Andruckfeder 500 befestigt, die das dem Schieberfrontblock 46 nähere Ende des Stapels 182 an die Gehäusedeckwand drückt — die z. B. ein Sichtfenster aufweisen kann —, und eine zweite Andruckfeder 502 ist ebenfalls am Gehäuseboden befestigt und drückt den Stapel nahe seinem dem Separatorsteg zugekehrt liegenden Ende nach oben.

Auf der dem Stapel abgewandten Seite des Separatorstegs ist um eine Achse 504 schwenkbar ein Hebel 506 angelenkt, der von einer Feder 508 in die in Fig. 2 dargestellte Position vorgespannt ist. Die Schrägfläche 510 am freien Ende des Hebels 506 gelangt beim Einschub des Schiebers in das Gehäuse in Kontakt mit dem ihm zugekehr-

ten Seite des Separatorstegs und wird durch die Keilwirkung nach unten gedrückt in die in Fig. 1 dargestellte Position. Die der Gehäusedeckwand zugewandte Seite des Hebels 506 trägt nahe ihrem freien Ende einen Haftbelag 26.

Die Vorrichtung arbeitet wie folgt:

Wenn, ausgehend von der Ruheposition nach Fig. 1, der Schieber 14 aus dem Gehäuse 1 herausgezogen wird, trifft der Mitnehmer 460 auf die ihm zugekehrt liegende kante des abzutrennenden Blattes 188 und schiebt dieses in Richtung Separatorsteg. Dies ist dann möglich, wenn der Stapel von der Feder 500 hinreichend kräftig in Anlage an der Deckwand gehalten wird. Sobald der Separator sich auswärts bewegt, beginnt der Hebel 506 unter der Wirkung seiner Vorspannfeder nach oben zu schwenken, wobei dies deshalb störungsfrei geschehen kann, weil die ihm zugekehrt liegende Seite des Separatorstegs im Bereich des Haftbelags eine entsprechend eingetiefte Bahn (gestrichelt angedeutet) aufweist.

Sobald der Hebel die in Fig. 2 angedeutete Position erreicht hat, klemmt er das Blatt 188 gegen die Gehäusedeckwand; wie insbesondere in Fig. 3 erkennbar, ist nämlich der Mitnehmer nicht in der Lage, den gesamten Hub über das Blatt am Gehäuse festzuhalten, weil die Feder 500, auf die der Separatorsteg aufläuft, nach unten gedrückt wird, so daß das in Förderrichtung hintere Ende des Stapels lose wird. Auf der dem Stapel abgewandten Seite des Separatorsteges ist dieser noch mit Keilabschnitten 512 versehen, deren Neigung so bemessen ist, daß beim Wiedereinschub des Schiebers die Federenden der Feder 502 nach unten gedrückt werden und unter dem. Separator hindurchgleiten können.

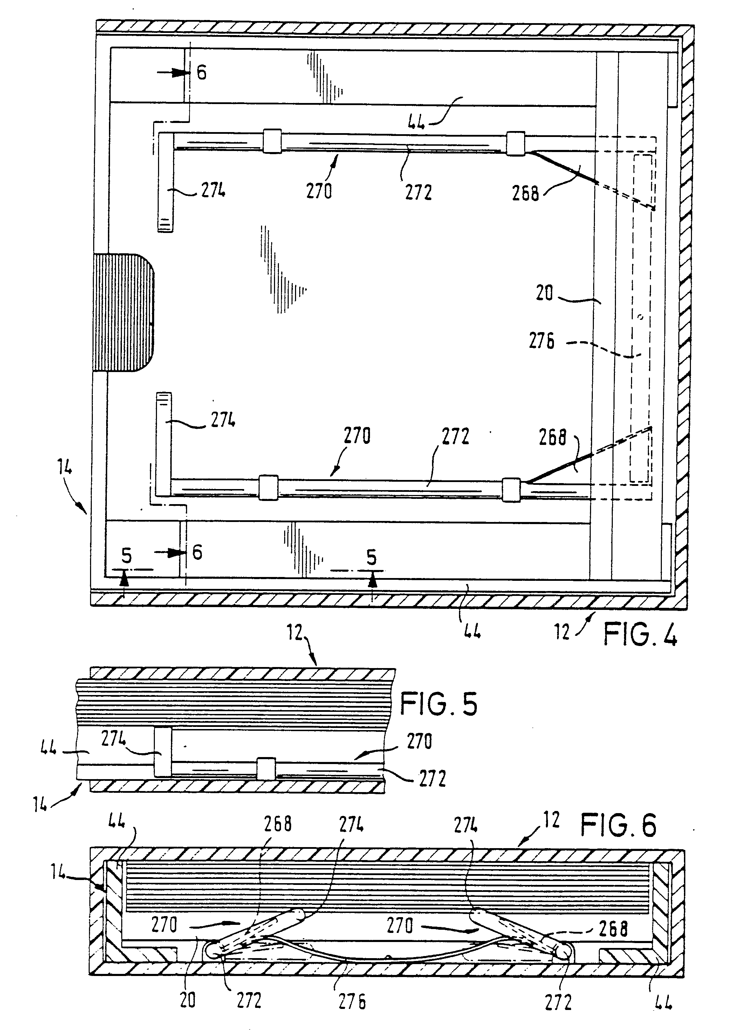

Ein weiteres Ausführungsbeispiel ist in Fig. 4 bis 6 gezeigt.

Fig. 4 ist ein Teillängsschnitt, Fig. 5 ist ein Horizontalschnitt und Fig. 6 ist ein Querschnitt durch die entsprechenden Ebenen der Vorrichtung.

Das erste Rahmenteil hat die Form eines Gehäuses 12, das zweite die Form eines Schiebers 14. Die Trenneinrichtung in Form des Separators 20 überspannt quer die Schieberholme 44. Im Ruhezustand, dargestellt in Fig. 6, drückt der Separator auf die Steuerflügel 268 zweier Hebel 270, die um parallel zur Auszugsrichtung sich erstreckende Achsen schwenkbar sind, die mit 272 bezeichnet sind. An dem den Flügeln 268 abgewandten Enden der Achsen befinden sich Arme 274, die aufeinander zu gerichtet sind. Die Hebel stehen unter Vorspannung durch eine Blattfeder 276 derart, daß die Arme 274 die Tendenz haben, in Richtung des eingelegten Blattstapels zu schwenken.

Wenn der Schieber eine Hublänge zurückgelegt hat, die ausreicht, das Einzelbild mittels des Mitnehmers (nicht gezeigt) unter dem Durchlaßspalt des Separators durchzuschieben, gibt der Separator die Flügel 268 allmählich frei, und die Arme 274 legen sich von unten an das nun unterste Blatt des Reststapels und hinter die Kante des im Gehäuse zurückgebliebenen Blattes, so daß dieses mit Sicherheit im Gehäuse zurückbleibt, während der Separator den Reststapel aus dem Gehäuse heraustransportiert. Die Vorspannung der die Arme 274 hebenden Feder kann so groß sein, daß deren freie Enden sich nicht nur an den Reststapel anlegen, sondern diesen noch ein Stück anheben: So kann das Einzelblatt nicht von den Armen abrutschen. — In der Endstellung des Schiebers kann der Separator gerade die Arme 274 gegen die Federkraft nach unten drücken, da er eine entsprechend abgeschrägte Form hat und als Keil wirkt. — Beim Rückhub kommt der Reststapel mit dem Separator und dem Schieber zurück und legt sich auf die Arme. Erst wenn der Separator auf die Flügel aufgleitet, werden die Arme wieder in die Ausgangsposition umgelegt.

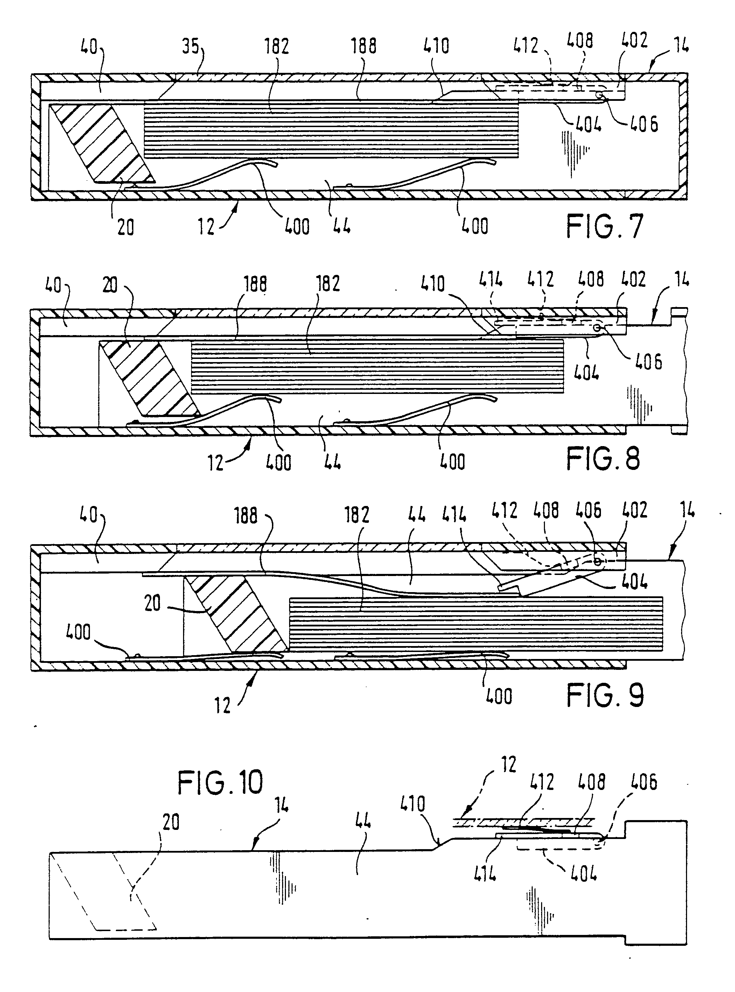

Fig. 7 bis 10 zeigen eine weitere Ausführungsform. Fig. 7 bis 9 stellen die ersten Phasen des Wechselvorgangs in schematisiertem Längsschnitt dar, während Fig. 10 eine Seitenansicht des zweiten Rahmenteils mit dem am ersten vorgesehenen Mitnehmer ist.

Das erste Rahmenteil ist als Gehäuse 12, das zweite als Schieber 14 ausgebildet. Der Stapel 182 wird von einer Federanordnung 400 nach oben gedrückt, so daß die hintere Kante des obersten Blattes an einer Rippe 402 abgestützt wird, während ihre Endkante vor dem Mitnehmer 404 zu liegen kommt. Der eigentliche Mitnehmer ist die dem Blatt zugekehrte Kante des Mitnehmerklotzes, die um knapp eine Blattdicke gegenüber der Rippe vorsteht. Bei Zug am Schieber nimmt der Separator 20 den Reststapel mit, während das Einzelblatt im Gehäuse zurückbleibt. Der Mitnehmerklotz 404 ist um eine Achse 406 schwenkbar am Gehäuse angelenkt, wo dieses die Rippe 402 trägt, und gleitet mit einem Fortsatz 408 auf der Oberkante des Schieberholmes 44 (Fig. 10). Diese ist als Steuerkurve ausgebildet, wobei nach einem Teilhub des Schiebers, der ausreicht, die führende Kante des Einzelblattes 188 durch die Trenneinrichtung zu schieben, die Schräge 410 dem Klotz 404 erlaubt, sich abzusenken und dabei eine erheblich dickere Arbeitsfläche dem Einzelblatt zuzukehren als vorher zulässig war.

Dabei steht er unter Vorspannung durch eine Blattfeder 412, und er ist mit einem Fanghaken 414 versehen, der das Abrutschen der Einzelblattkante in Richtung Rippe 402 verhindert.

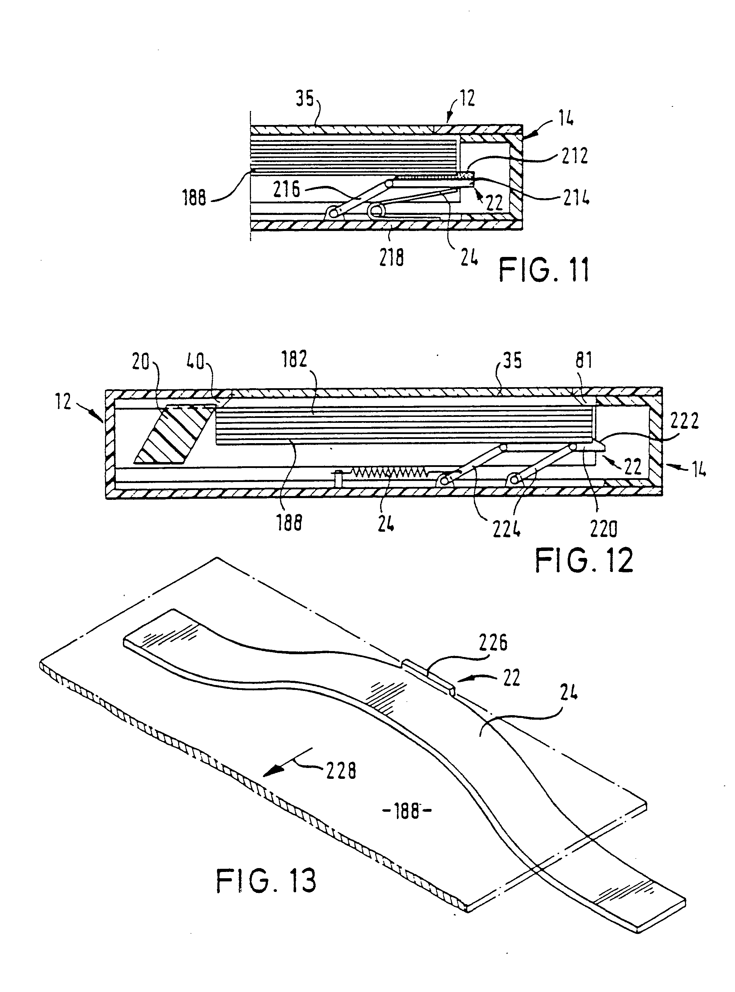

Fig. 11, 12 und 13 schließlich zeigen weitere Ausgestaltungen der erfindungsgemäßen Vorrichtung.

In Fig. 11 ist der Mitnehmer 22 von einem kompressiblen Belag 212 auf einer Trägerplatte 214 gebildet, die mittels Lenker 216 am Boden 218 eines der Rahmenteile angelenkt ist. Eine Schenkelhalsfeder 24 drückt den Mitnehmer in Anlage an die hintere Kante des abzutrennenden Blattes 188.

Gemäß Fig. 12 ist der Mitnehmer 22 als eine Platte 220 ausgebildet, die mit einer hochstehenden Leiste 222 die hintere Kante des abzutrennenden Blattes 188 hintergreift. Die Vorspannanordnung umfaßt eine Schraubenzugfeder 24, die irgendwo stationär eingehangen ist und an eine Parallelogrammgestängeanordnung 224 angreift, an die die Mitnehmerplatte angelenkt ist. Auf diese Weise ist der Mitnehmer unabhängig von der Stapeldicke parallel zu seiner Hauptebene gehalten.

Gemäß Fig. 13 ist der Mitnehmer 22 ein Fortsatz 226, abgewinkelt von einer Blattfeder 24, die sich quer zu der durch den Pfeil 228 symbolisierten Bewegungsrichtung des abzutrennenden Blattes 188 erstreckt; auch hier ist der Mitnehmer im wesentlichen immer in derselben Wirkungsposition bezüglich der Blattkante unabhängig von der Zahl der Blätter im Stapel.

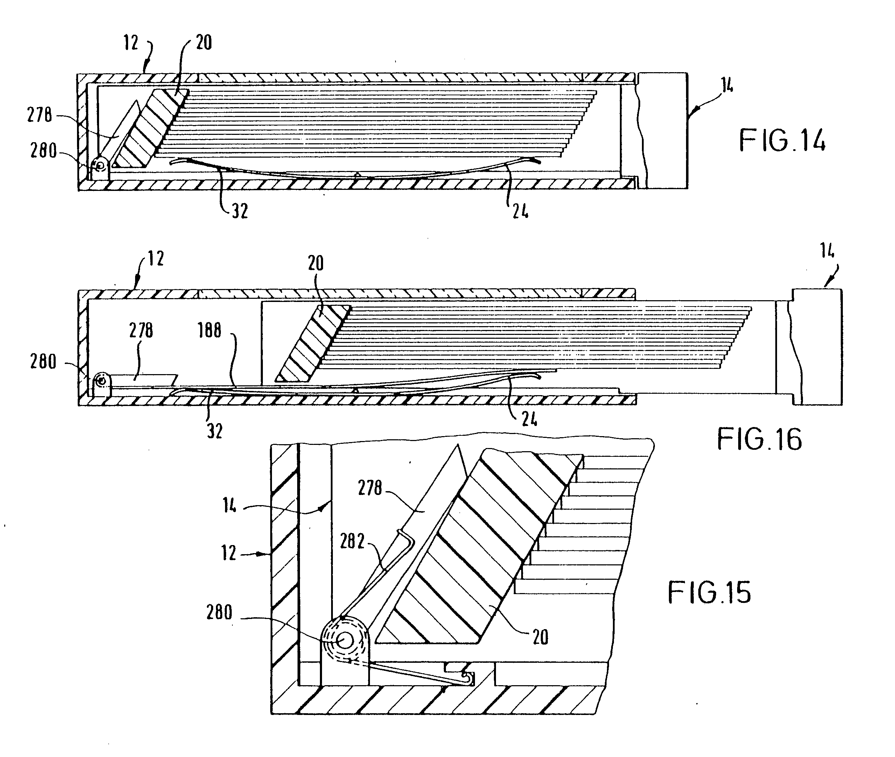

Fig. 14 und 16 zeigen im Längsschnitt den Ruhezustand bzw. den teilweise herausgezogenen Zustand einer Vorrichtung gemäß der Erfindung, bei der das erste Rahmenteil von einem Gehäuse 12 und das zweite von einem Schieber 14 gebildet sind. Man erkennt eine Federanordnung 24/32 und den Separatorsteg 20 als Trenneinrichtung.

Zu Beginn des Auszugshubes des Schiebers führt die Zufuhreinrichtung das im Gehäuse unterste Blatt 188 unter dem Separatorsteg durch, hinter dem eine schwenkbare Backe 278 um ein Gelenk 289 drehbar angeordnet ist. Eine Feder 282 spannt die Backe 278 in die in Fig. 16 gezeichnete Position vor, wie man der vergrößerten Darstellung nach Fig. 15 entnimmt. Der Separatorsteg hat die Backe bei eingeschobenem Schieber in die inaktive Position infolge Keilwirkung beim Auflaufen umgelegt. Die Freigabe der Backe kann automatisch beim Auszug erfolgen, doch ist dies nicht im einzelnen dargestellt.

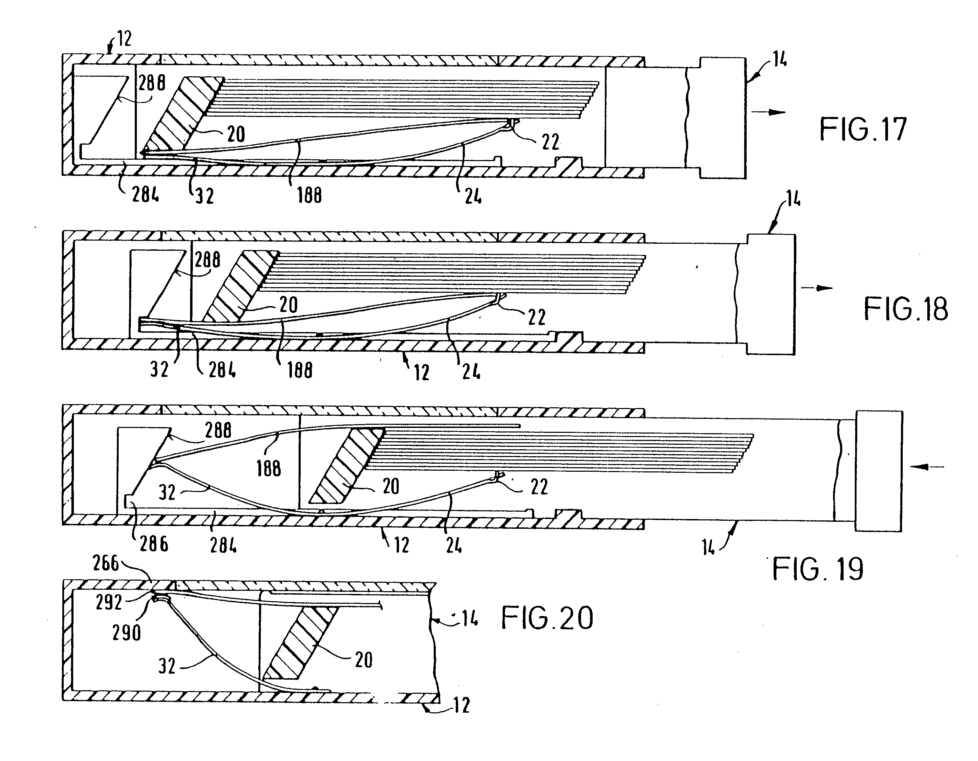

Fig. 17, 18 und 19 zeigen im schematisierten Längsschnitt drei Phasen des Auszugshubes bei einer weiteren Ausführungsform. Die Zufuhr des abzutrennenden Blattes erfolgt mittels des Mitnehmers, nämlich des Hakens 22, der an dem Federarm 24 sitzt. Gehäuse, Schieber und Separatorsteg entsprechen den vorher geschilderten Ausführungen. Der als zweites Rahmenteil dienende Schieber 14 koppelt sich nach einer gewissen Auszugslänge mit einem Bügel 284, der längsverschieblich in dem das erste Rahmenteil bildenden Gehäuse 12 angeordnet ist. An dem Bügel ist eine Einsenkung 286 unterhalb einer Leitfläche 288 angeformt.

Sobald der Mitnehmer, infolge eines ersten Hubes des Schiebers, die führende Kante des abzutrennenden Blattes 188 unter dem Separator 20 durchgeschoben hat, beginnt der Schieber auch, nun gekoppelt mit dem Bügel 284, diesen in Auszugsrichtung mitzunehmen, mit der Folge, daß diese Kante des abgetrennten Blattes in die Einsenkung 286 gelangt und dort von dem Arm 32 der Federanordnung festgeklemmt wird. Dieser Federarm bildet eine Backe einer Zangenanordnung, und die auf der anderen Seite der festgeklemmten Kante des Blattes befindliche Randfläche der Einsenkung bildet die andere Backe der Zangenanordnung. Dieser Zustand bleibt, bis die hintere Kante des abgetrennten Blattes vom Separator freikommt. Schiebt man nun den Schieber wieder ein, so nimmt er den Bügel 284 wieder mit einwärts in das Gehäuse, wobei die Einsenkung vom abgezogenen Blatt freikommt, so daß der freie Arm 32 der Federanordnung die von ihm abgestützte Kante des Blattes längs der Leitfläche 288 ruckfrei nach oben gleiten läßt.

Fig. 20 zeigt weitgehend schematisiert im Teillängsschnitt eine Ausführungsform, bei der der am Schieber 14 angebrachte Separatorsteg 20 infolge Herausziehens des Schiebers aus dem Gehäuse 12 die an diesem angebrachte Blattfeder 32 allmählich freigibt, so daß sich deren freies Ende, versehen mit einem Haftbelag 290, an die Blattkante 292 anlegt und diese gegen die Gehäusedeckwand 266 anpreßt, welche dann die andere Backe im Zusammenwirken mit der von der Feder gebildeten ersten Backe bildet.

Die beschriebenen Zangenanordnungen sind nur einige von einer Vielzahl möglicher Ausführungsformen; so könnte man anstatt an der Führungskante des Blattes zu klemmen auch an einer oder beiden Seiten mit ähnlichen Zangen angreifen, oder man könnte nicht die Dicke, sondern die Breite des Blattes zwischen den Backen einspannen.

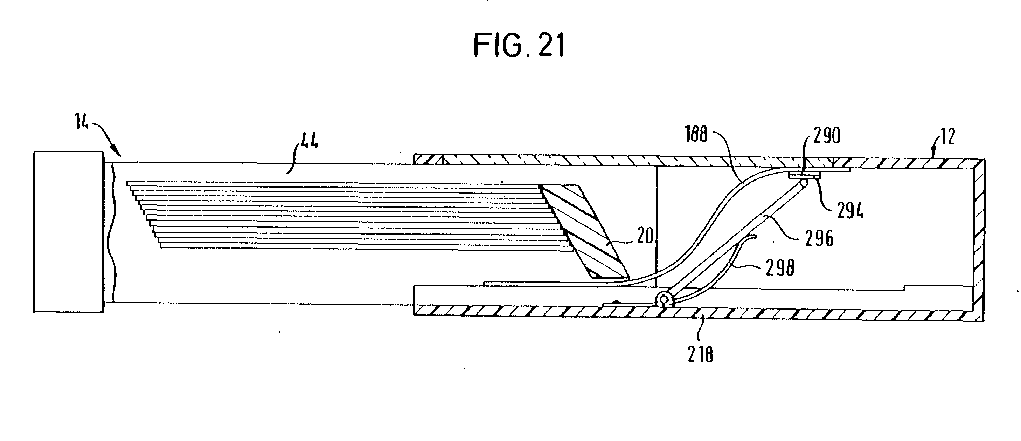

Fig. 21 stellt eine Abwandlung der Zangenanordnung nach Fig. 20 dar: Der Haftbelag 290 befindet sich auf einer Andruckanordnung, bestehend aus einer den Haftbelag tragenden Platte 294, die gelenkig am Ende eines Hebels 296 sitzt. Der Hebel ist an den Gehäuseboden 218 angelenkt. Eine Feder 298 drückt den Haftbelag an das vereinzelte Bild.

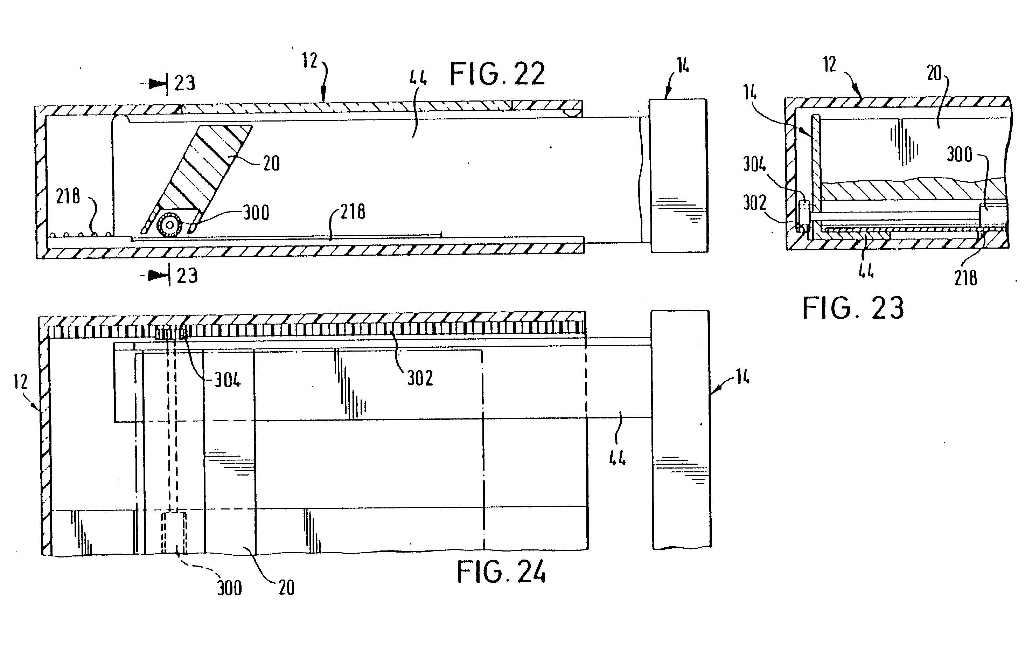

Fig. 22 bis 24 beziehen sich auf einen anderen Typ der Halteeinrichtung für das zu vereinzelnde Bild.

Fig. 22 zeigt in einem schematisierten Längsschnitt eine Vorrichtung gemäß der Erfindung, Fig. 23 ist ein Teilquerschnitt zu dieser Figur, und Fig. 24 zeigt einen Teilhorizontalschnitt.

Während bei einem bevorzugten Ausführungsbeispiel die Halteeinrichtung ein erstes Klemmelement in Form einer mit dem Separatorsteg mitlaufenden Rolle, ein zweites Klemmelement in Form des stationär am ersten Rahmenteil (Gehäuse) befestigten Haftbelags und eine Federanordnung in Form der den Schuh gegen den Haftbelag drückenden Feder umfaßt, sind hier die Klemmelemente in kinematischer Umkehr so ausgebildet, daß der Haftbelag am Umfang einer Walze 300 vorgesehen ist, die über eine Zahnstange 302 und ein mit der Walze verkeiltes Ritzel 304 beim Auszug des Schiebers 14, der das zweite Rahmenteil bildet, zum Umlauf angetrieben ist. Die Walze hat einen Durchmesser gleich dem Teilkreis des Ritzels, so daß sie sich auf dem Einzelblatt mit einer Umfangsgeschwindigkeit abwälzt, die gleich der Auszugsgeschwindigkeit des Schiebers ist. Dabei wird das Einzelblatt an den Boden 218 des ersten Rahmenteils in Form des Gehäuses 12 gepreßt und in diesem festgehalten.

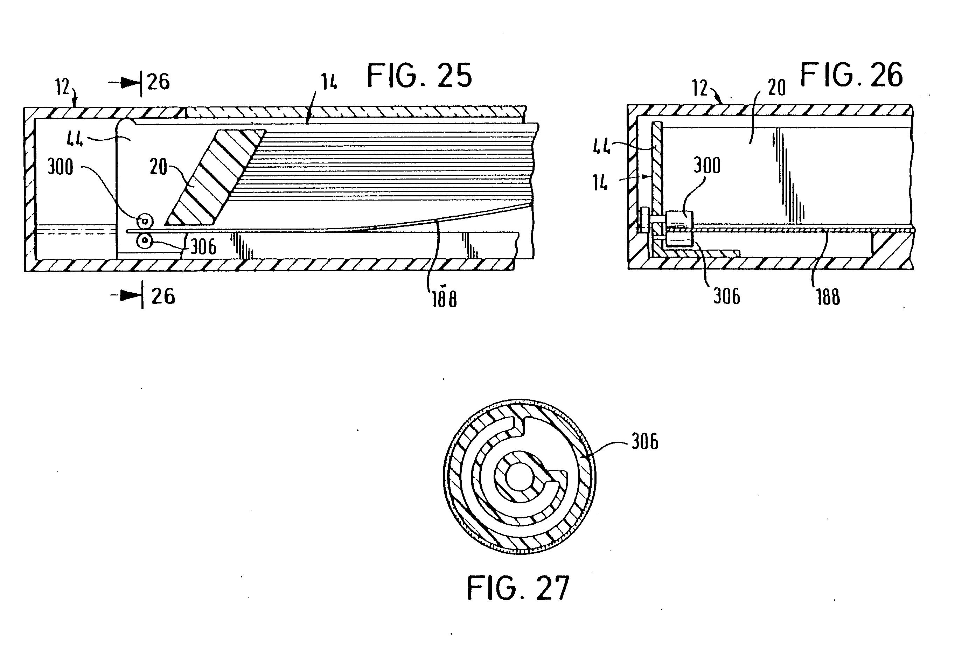

Die Vorrichtung nach Fig. 25 bis 27 zeigt eine weitere Ausführungsform der Halteeinrichtung gemäß der Erfindung. Das Einzelblatt 188 gelangt hinter dem Separatorsteg 20 in den Arbeitsspalt zwischen zwei Walzen 300, 306, von denen mindestens eine in derselben Art angetrieben ist wie bei Fig. 22 bis 24 beschrieben. Die andere Walze kann auch direkt von der ersten angetrieben sein, oder aber durch Reibung mitgenommen werden. Der Anpreßdruck wird dadurch erzeugt, daß eine der Walzen, vorzugsweise die nicht angetriebene, in sich federnd ausgebildet ist und ihre Welle etwas näher an die andere Walze herangerückt ist als dem Durchmesser eigentlich entsprechen würde. Der Querschnitt durch eine solche federnde Walze ist in Fig. 27 dargestellt, und man erkennt, daß Ausnehmungen in sich geschlossen sich mäanderförmig rings um die Nabe erstrecken, so daß immer genug Federweg zur Verfügung steht.

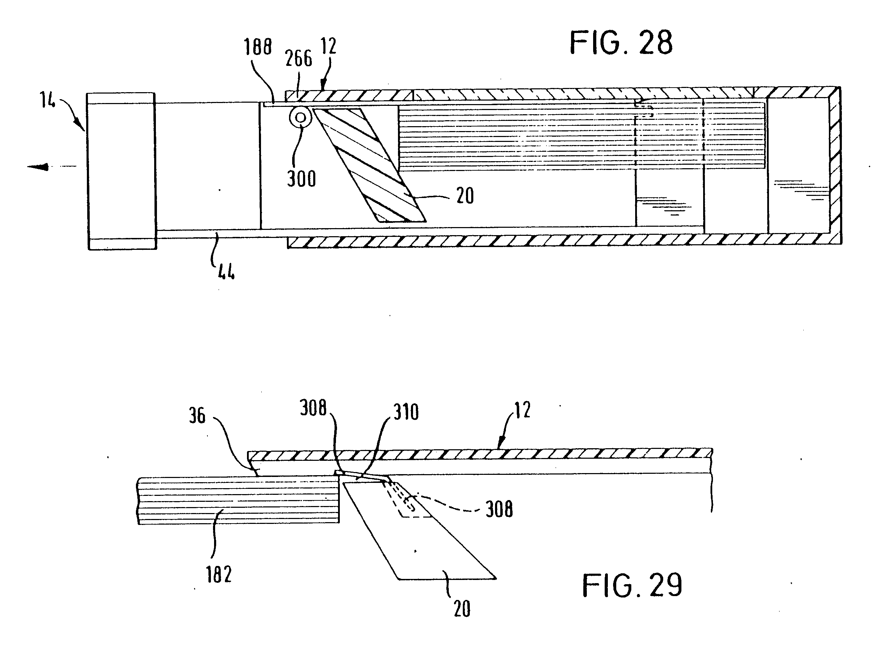

Fig. 28 zeigt eine im Gehäuse 12, das hier das zweite Rahmenteil ist, drehbar gelagerte Walze 300, die über eine in den Schieberholmen 44 angebrachte Zahnstange (nicht gezeigt) und ein mit der Walze verkeiltes Ritzel (nicht gezeigt) zu einer Umfangsgeschwindigkeit angetrieben wird, die gleich ist der Auszugsgeschwindigkeit des Schiebers. Auf diese Weise wird das vereinzelte Bild 188 hinter dem Separatorsteg 20 erfaßt, gegen die Gehäusedeckwand 266 gepreßt, an der es entlang schleift, und in der äußeren Schieberendlage freigegeben.

In den zuvor beschriebenen Ausführungsbeispielen wurde die Leiteinrichtung hinsichtlich ihrer verschiedenen Aspekte nur am Rande diskutiert. Gerade für Fotoabzüge jedoch bietet auch sie gewisse Komplikationen. Da das vereinzelte Blatt unter Umständen ziemlich stark gewölbt sein kann, erweist es sich als zweckmäßig oder sogar als unumgänglich, gewisse Vorsichtsmaßregeln bei der Auslegung der Leiteinrichtung zu beachten. So muß das vereinzelte Foto wieder durch einen Durchlaß der Trenneinrichtung auf die andere Stapelseite geführt werden, wenn auch dieser Durchlaß viel weniger kritisch ist als der Abtrenn-Durchlaß. — Im Prinzip sind alle Konstruktionen, die für die Zufuhr verwendbar sind, auch für die Rückführung des Einzelblattes anpaßbar. Im allgemeinen aber genügt es, das Foto von seiner hinteren Kante aus zu schieben, wobei es gegebenenfalls noch festgeklammert wird. Nachstehend werden einige Ausführungsformen kurz beschrieben.

Hinsichtlich des erwähnten Rücklauf-Durchlasses ist Vorsorge dafür zu treffen, daß der Reststapel diesen Durchlaß nicht versperrt; diese Gefahr besteht besonders bei Stapeln stark gewölbter Fotoabzüge.

Fig. 29 zeigt im schematisierten Längsteilschnitt eine Bauart, die sowohl den Reststapel für den Einschub des vereinzelten Blattes niederhält als auch den Rückkehr-Durchlaß während des Wechselzyklusbeginns blokkiert:

Im als Trenneinrichtung vorgesehenen Separatorsteg 20 ist eine dünne, elastische Lamelle 308 angeordnet, die zwischen Niederhalter 36 an einer Deckwand des ersten Rahmenteils greift. Das freie Ende der Lamelle drückt dabei auf das ihm zugekehrt liegende Blatt des Reststapels 182.

Die Lamelle ist, um ein kurzes Wegstück in Rahmenbewegungsrichtung verlagerbar, im zweiten Rahmenteil abgestützt, so daß es zu Beginn des nächsten Wechselzyklus nach links (in Fig. 29) ausweichen kann, jedoch dabei den Durchlaß 310 immer noch blockiert, so daß das zuletzt rückgeführte Blatt von dem Niederhalter auf den Reststapel gedrückt wird, bevor die Lamelle wieder eingefahren wird.

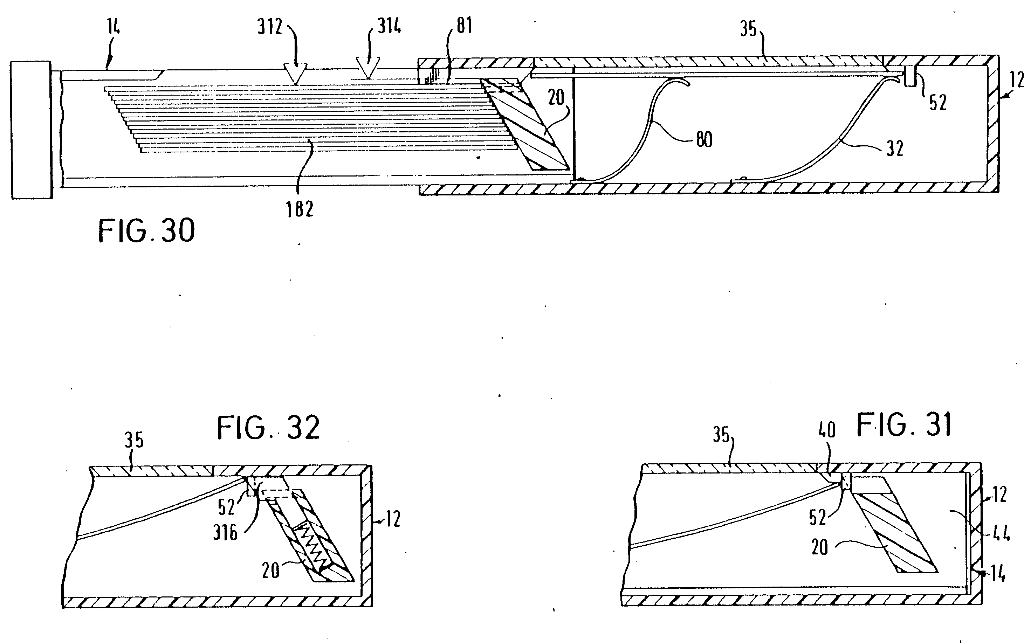

Fig. 30 zeigt im schematisierten Schnitt die bevorzugten Mittel: Feder 32 hält die hintere Blattkante vor dem Schiebeanschlag 52, Feder 80 unterstützt das Blatt etwa mittig, und hinter dem Separatorsteg 20 wird der Reststapel 182 auf einem Niveau gemäß Pfeil 312 gehalten, indem die Niederhalter 81 auf ihn einwirken. Der Pfeil 314 definiert das Niveau derjenigen Kante des Separatorsteges, die vom Einzelblatt überlaufen wird und die im kämmenden Eingriff mit den Niederhaltern steht.

Fig. 31 stellt in schematischer Teilseitenschnittansicht eine Konstruktion dar, mit der verhindert wird, daß bei der Abtrennphase des Wechselzyklus auf dem Durchlaß für die Blattrückführung fälschlicherweise auch ein Blatt in den Spalt gelangen kann. Dies erfordert hier die Rippen 40, welche kammartig in Ausnehmungen des Separatorsteges 20 greifen.

Alternativ sind in Fig. 32 aus dem Separatorsteg ausfahrende Sperrglieder 316 dargestellt, die den Durchlaß erst freigeben (entweder durch Federwirkung infolge Keilauflauf oder zwangsgesteuert), wenn in der Rückführphase eine Blattkante ansteht (« Rückschlagventilprinzip »).

Die folgenden Figuren beziehen sich auf Mittel zum Sicherstellen der Blattrückführung selbst. Wie erwähnt, wird vorzugsweise das Einzelblatt durch den Durchlaß geschoben, mit seiner hinteren Kante an einem Anschlag anliegend. Wenn das Blatt um einen Krümmungsradius gewölbt ist, der etwa senkrecht zur Bewegungsrichtung liegt, so besteht das Risiko, daß das Blatt nicht durch den Durchlaß geschoben, sondern zusammengestaucht wird und/oder von dem Anschlag abrutscht.

Im Prinzip sind also bei der Leiteinrichtung solche Mittel vorzusehen, die das Einzelblatt möglichst sicher vor dem « schiebenden » Anschlag halten, und/oder Mittel, die eine etwaige Wölbung des Fotos ausgleichen oder mildern.

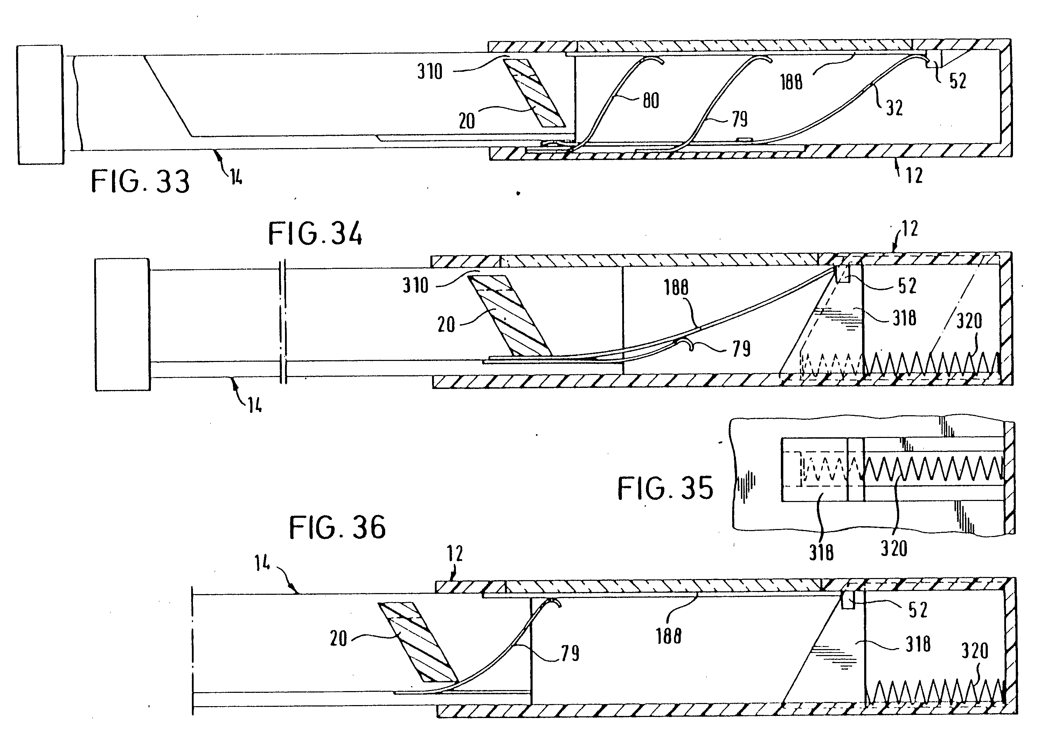

Fig. 33 zeigt im schematisierten Längsschnitt ganz prinzipiell diese Mittel: Eine erste Blattfeder 32 klemmt das Einzelblatt 188 vor dem « schiebenden » Anschlag 52, und weitere Blattfedern 79, 80 drücken das Blatt möglichst eben an die Deckwand des Gehäuses 12 (erstes Rahmenteil), um die führende Kante des Einzelblattes einigermaßen genau vor dem Durchlaß 310 zu präsentieren. Die Zuverlässigkeit wird umso besser sein, je länger die Blattfedern an dem Einzelblatt während des Blattrücklaufs angreifen, ehe diese Federn von dem Separatorsteg 20 der Trenneinrichtung überlaufen werden. Die dem Einzelblatt 188 zugekehrte Seite des Separatorsteges ist vorzugsweise derart abgeschrägt, daß eine vor ihm abwärts gewölbte führende Kante des Einzelblattes längs der Schräge « heraufklettern » kann infolge der Keilwirkung dieser Schräge. Wird jedoch diese Blattkante durch andere Mittel dem Rückführdurchlaß zwangsweise präsentiert, kann die entsprechende Fläche des Separatorsteges auch senkrecht zur Blattebene verlaufend ausgebildet sein.

Anstelle der Blattfeder 32 kann man andere Mittel verwenden, um die dem Separatorsteg abgewandte Kante des Einzelblattes an die andere Gehäusekante zu verlagern. Dies ist in Fig. 34 dargestellt : Ein Keil 318 ist von einer Feder 320 unter diese Kante des Blattes 188 geschoben worden und hat sie vor den schiebenden Anschlag 52 gehoben, und zwar noch während der ersten Hälfte des Wechselzyklus. Die andere Blattkante wird dann, nach Passieren des Separatorsteges 20, von einer Blattfeder 79 vor den Rückführdurchlaß 310 gehoben. Gegen Ende der zweiten Phase des Wechselzyklus schiebt dann der Separatorsteg den Keil 318 zurück. — Anstelle der Feder 320 könnte der Keil 318 auch durch eine Kopplung mit dem zweiten Rahmenteil, allerdings mit Phasenverschiebung, von diesem hin- und herverlagert werden. — Anstelle des verschieblichen Keils könnten auch ein- und ausschwenkbare schräge Keilflügel vorgesehen sein, ohne daß sich am Wirkprinzip etwas ändert. Fig. 35 zeigt schematisch die Draufsicht auf den Keil 318, und Fig. 36 stellt die Situation am Umkehrpunkt des Wechselzyklus dar.

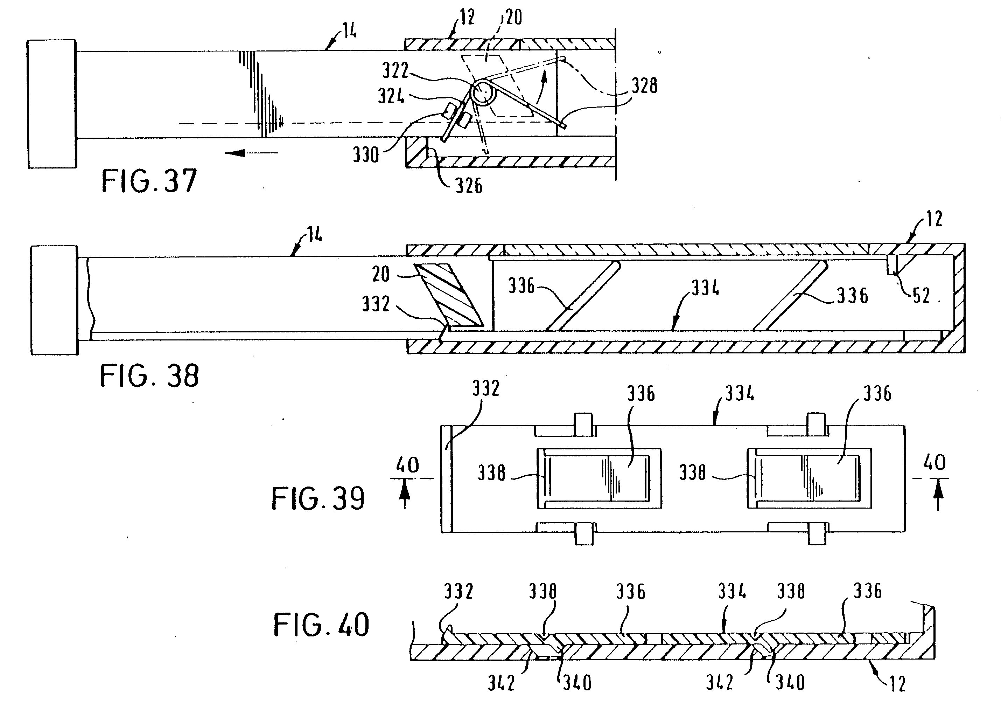

Fig. 37 zeigt in schematischer Seitenansicht einen Mechanismus, der anstelle der Hebefeder 79 verwendbar ist. Um einen Zapfen 322 ist eine Drahtfeder 324 mit ihrer Öse schwenkbar. Einer ihrer Arme ist abgewinkelt und greift von außen quer unter die betreffende Kante des Einzelblattes, der andere Arm ist durch Auflaufen auf einen Anschlag 326 umlegbar, nimmt dabei den abgewinkelten Arm 328 mit und bewirkt so das Heben der Blattkante. Eine Rasteinrichtung 330 ist angedeutet, um unkontrollierte Bewegungen des Mechanismus zu unterbinden ; dieser soll ja nur in den beiden Endlagen (Ruheposition / Umkehrpunkt) umgesteuert werden.

Fig. 38 bis 40 zeigen eine Variante der Hebelanordnung als Leiteinrichtung. Der Separatorsteg 20 läuft kurz vor seiner Umkehrstellung auf einen Mitnehmerhaken 332 eines Hebelträgers 334 auf, an dem zwei Hebel 336 mittels angespritzter Gelenke 338 angelenkt sind. Durch die Verlagerung des Hebelträgers laufen die an der Unterseite der Hebel angeformten Nocken 340 auf Anschläge 342 einer Steuerkurve auf, so daß die Hebel hochgestellt werden. Beim Rücklauf trifft der Separatorsteg zuerst auf den ihm näheren Hebel und drückt dabei den gesamten Hebelträger um ein kleines Stück zurück, bis der Hebel umgelegt ist ; der andere Hebel hingegen bleibt noch stehen, weil die Anschläge 342 für die beiden Hebel einen größeren Abstand voneinander haben als die zugehörigen Nocken.

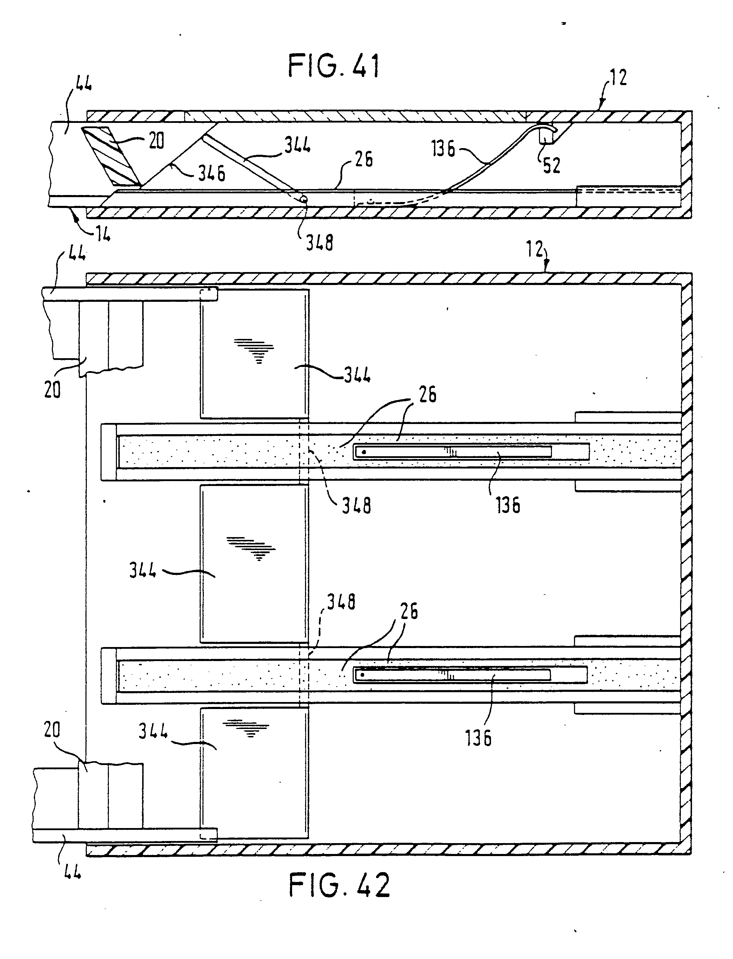

Die Ausführungsform nach Fig. 41 und 42 stellt eine Ausführungsform dar, bei der die Halteeinrichtung für das Einzelbild Haftbeläge 26 im ersten Rahmenteil umfaßt. Infolge statischer Aufladung kann, wie oben erwähnt, das Einzelblatt so fest an den Haftbelägen kleben, daß erhebliche Kräfte nötig sind, um es dort abzureißen. Es muß aber auf die den Haftbelägen abgewandte Seite des Rahmenteils geleitet werden. Daher sind Federn 136 mittig zwischen je zwei Haftbelägen vorgesehen. Die dem Separatorsteg 20 zugekehrte Kante des Einzelblattes wird von einem Hebel 344 geliftet, der mittels Steuerschrägen 346 an den Enden der Schieberholme 44 niedergedrückt werden, während er durch Federkraft (nicht dargestellt) gehoben wird. Der Hebel erstreckt sich, wie man in Fig. 42 sieht, über die gesamte Breite der Vorrichtung, und insbesondere greift er auch unmittelbar neben den Haftbelägen an dem Einzelblatt an. Die Welle des Hebels ist mit 348 angedeutet.

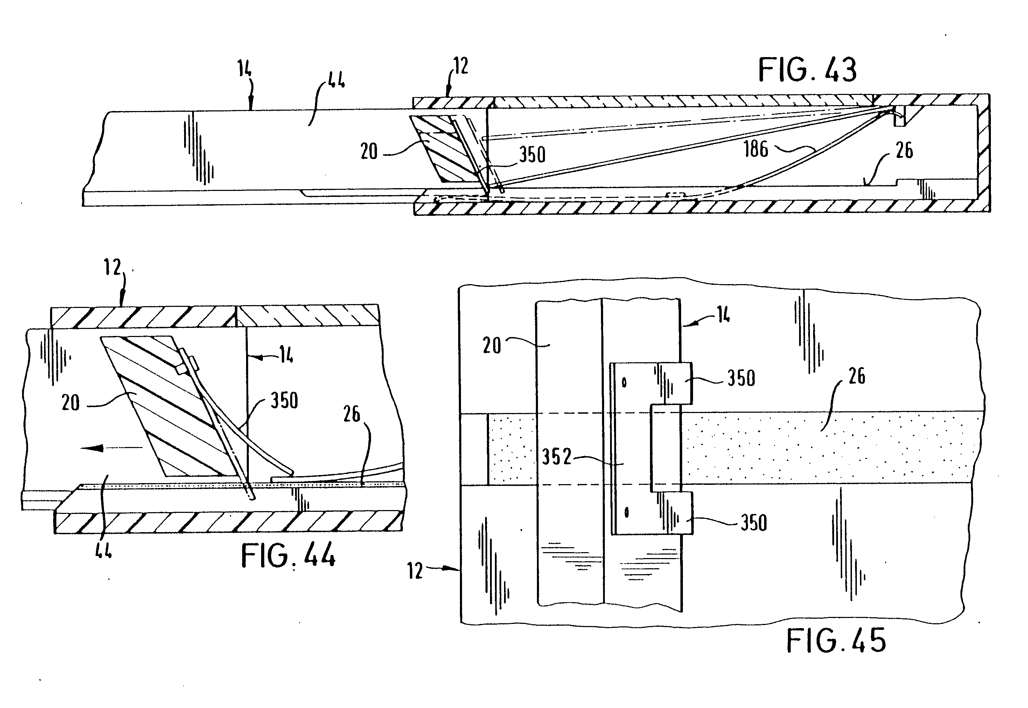

Fig. 43 bis 45 zeigen eine weitere Variante. An dem Separatorsteg 20 ist beidseits des Haftbelags 26 eine Lamelle 350 angeordnet, daß sie federnd in eine entsprechende Ausnehmung neben dem Haftbelag greift. Die beiden Lamellen sind durch eine Brücke 352 miteinander verbunden. Beim Durchlauf des Einzelblattes wird jede Lamelle federnd angehoben und schnappt nach Passieren der hinteren Blattkante wieder in die Ausnehmung zurück, so daß beim Rückhub die betreffende Blattkante vom Haftbelag abgerissen wird und die Kante längs des Separatorsteges hochsteigen muß, weil der Rückhub durch den anderen Durchlaß nun durch die Lamelle sicher versperrt ist.

Eine erhebliche Steigerung der Betriebssicherheit läßt sich erreichen, wenn dafür gesorgt wird, daß zumindest in einigen Relativlagen der Rahmenteile der Benutzer die Bewegungsrichtung nicht umkehren kann, da an solchen Stellen eine Bildbeschädigung eintreten könnte, insbesondere eine Stauchung. Deshalb ist es bevorzugt, im Rahmen der Erfindung Sperreinrichtungen vorzusehen, die zumindest an den betreffenden Stellen eine Umkehr der Bewegungsrichtung verhindern. Im Extremfall kann man eine Art Freilauf vorsehen, der einen Richtungswechsel nur in den Endlagen der Rahmenteile — also ganz zusammengeschoben oder ganz auseinandergezogen — zuläßt.

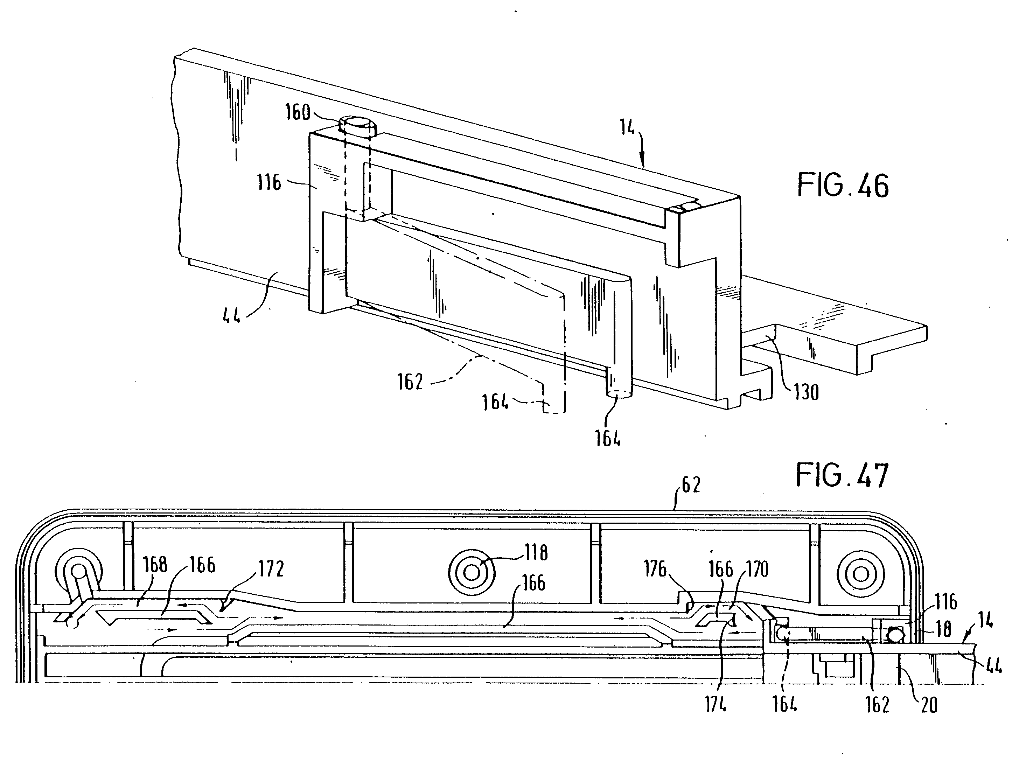

Bevorzugt ist allerdings das in Fig. 46 und 47 dargestellte System.

Bei diesem Ausführungsbeispiel, bei dem Sperren nur in den kritischen Phasen des Wechselzyklus wirken, ist in einem Lagerauge 116 an der Außenseite eines Holms 44 des Schiebers 14 im Bereich des Separatorsteges 20 um einen sich senkrecht zur Längsrichtung des Holmes 44 erstreckenden Zapfen 160 schwenkbar eine Steuerklinke 162 angeordnet, die mit einem Steuernocken 164 längs Kanälen geführt ist, die durch an die Unterschale 62 angeformte Führungsschienen 166 definiert sind, so daß der Steuernocken 164 den in Fig. 47 mit Pfeilen markierten Pfaden beim Einschub bzw. beim Auszug folgen muß. Während des größten Teils des Wechselzyklus kann man ungehindert die Bewegungsrichtung umkehren, nicht jedoch dann, wenn sich der Steuernocken 164 während des Einschubs im Kanalabschnitt 168 bzw. während des Auszugs im Kanalabschnitt 170 befindet. Im ersteren Falle würde, wenn man kurz vor der inneren Endstellung des Schiebers diesen wieder herausziehen will, der Steuernocken auf den Anschlag 172 auflaufen; im letzteren Falle, wenn also kurz vor Erreichen der äußeren Endstellung der Schieber wieder eingeschoben wird, stößt der Steuernocken entweder auf den Anschlag 174 oder auf die Anschlagkante 176. Der Zapfen 160 sitzt mit hinreichender Reibung im Lagerauge, so daß die Steuerklinke zwar den Führungsstegen ohne merkbare Behinderung folgen, nicht aber frei pendeln kann.

Diese Freilaufrichtung kann zusätzlich spiegelsymmetrisch auch noch auf der anderen Seite des Gehäuses 12 zwischen diesem und dem Schieber 14 angeordnet sein, wobei dann beide Freilaufeinrichtungen synchron arbeiten. Gegebenenfalls kann eine manuelle Inaktivierung der Freilaufeinrichtung(en) vorgesehen sein.

## Patentansprüche

1. Vorrichtung zum zyklischen Umschichten eines Stapels rechteckiger oder quadratischer Blätter, insbesondere eines Stapels von Fotoabzügen, mit einem ersten (12) und einem zweiten (14) Rahmenteil, die relativ zueinander und parallel zur Stapelhauptebene bewegbar sind, und mit Mitteln, die bei einer Hin- und Herbewegung der Rahmenteile ein Einzelblatt (188) an einer Stapelseite abnehmen und an der andern Stapelseite wieder zufügen, welche Mittel umfassen:

   (a) eine Trenneinrichtung zum Abtrennen des Einzelblattes vom Stapel,

   (b) eine Zufuhreinrichtung zum Zuführen von Blättern zu der Trenneinrichtung,

   (c) eine erste Halteeinrichtung zum Halten des abgetrennten Einzelblattes im ersten Rahmenteil und eine zweite Halteeinrichtung zum Halten des Reststapels im zweiten Rahmenteil, sowie

   (d) eine Leiteinrichtung zum Führen des abgetrennten Einzelblattes zwecks Rückführung auf die andere Seite des Reststapels, dadurch gekennzeichnet, daß als Zufuhreinrichtung ein am abzutrennenden Einzelblatt dessen in Förderrichtung hintere Kante hintergreifender Mitnehmer (22, 404, 420) vorgesehen ist, während als erste Halteeinrichtung mindestens ein zusätzliches Element (26/28, 32/80, 506/520, 300/306, 278, 32/288, 274) vorgesehen ist, und daß der Mitnehmer mit dieser Kante zumindest solange in Eingriff bleibt, bis die erste Halteeinrichtung wirksam ist.

2. Vorrichtung nach Anspruch 1, dadurch gekennzeichnet, daß die erste Halteeinrichtung (26/28) an den beiden Flächen des Einzelblattes (188) angreifend ausgebildet ist.

3. Vorrichtung nach Anspruch 2, dadurch gekennzeichnet, daß die erste Halteeinrichtung eine im ersten Rahmenteil (12) vorgesehene Zangenanordnung (506/266) umfaßt.

4. Vorrichtung nach Anspruch 3, dadurch gekennzeichnet, daß das Schließen und Öffnen der Zangenanordnung (506/266) durch die Relativbewegung der Rahmenteile (12, 14) gesteuert wird.

5. Vorrichtung nach einem der Ansprüche 3 oder 4, gekennzeichnet durch ein relativ zum ersten Rahmenteil bewegliches Zangenglied (506) und ein stationär im ersten Rahmenteil angeordnetes Zangenglied (266).

6. Vorrichtung nach Anspruch 5, dadurch gekennzeichnet, daß das relativbewegliche Zangenglied an der Seite des Einzelblattes zur Anlage bringbar ist, die vor dem Abtrennen dem Reststapel zugekehrt war.

7. Vorrichtung nach Anspruch 5, dadurch gekennzeichnet, daß das relativbewegliche Zangenglied (294 in Fig. 21) an der Seite des Einzelblatts (288) zur Anlage bringbar ist, das vor dem Abtrennen dem Reststapel abgekehrt war.

8. Vorrichtung nach Anspruch 7, dadurch gekennzeichnet, daß der Mitnehmer (22) auf einem ersten Federarm (24) angeordnet ist, der gegen den Stapel drückt, und daß das relativbewegliche Zangenglied von einem zweiten Federarm (32) gebildet ist, der mit einer am ersten Rahmenteil (12) vorgesehenen Klemmfläche zusammenwirkt.

9. Vorrichtung nach Anspruch 8, dadurch gekennzeichnet, daß die beiden Federarme ein einstückiges Bauteil bilden.

10. Vorrichtung nach Anspruch 8 oder 9, dadurch gekennzeichnet, daß beide Federarme, durch die Relativbewegung der Rahmenteile (12, 14) gesteuert, in und außer Eingriff mit dem Einzelblatt (188) bringbar sind.

11. Vorrichtung nach Anspruch 2, dadurch gekennzeichnet, daß die erste Halteeinrichtung eine im zweiten Rahmenteil angeordnete, auf dem Einzelblatt mit einer Umfangsgeschwindigkeit gleich der Relativgeschwindigkeit der Rahmenteile (12, 14) laufende Rolle (28) umfaßt, die das Einzelblatt (188) mit einem Gegenelement (26) klemmend hält.

12. Vorrichtung nach Anspruch 11, dadurch gekennzeichnet, daß das Gegenelement (134) eine im ersten Rahmenteil stationär angeordnete Bahn umfaßt.

13. Vorrichtung nach Anspruch 11, dadurch gekennzeichnet, daß das Gegenelement eine zweite, im zweiten Rahmenteil (14) angeordnete Rolle (306) umfaßt und daß eine der Rollen durch die Relativbewegung der Rahmenteile angetrieben ist.

14. Vorrichtung nach einem der vorangehenden Ansprüche, dadurch gekennzeichnet, daß der Mitnehmer (460) integraler Bestandteil des ersten Rahmenteils (12) ist.

15. Vorrichtung nach einem der Ansprüche 1-13, dadurch gekennzeichnet, daß der Mitnehmer (22) einen Teil einer Andruckeinrichtung (24, 32) bildet, die bei zusammengeschobenen Rahmenteilen (12, 14) den Stapel gegen ein Sichtfenster (35) drückt.

16. Vorrichtung nach einem der vorangehenden Ansprüche, dadurch gekennzeichnet, daß der Mitnehmer (22, 460) hakenartig ausgebildet ist.

17. Vorrichtung nach Anspruch 16, dadurch gekennzeichnet, daß der Mitnehmer eine wirksame Eingriffshöhe aufweist, die maximal der Dicke eines Blattes entspricht.

18. Vorrichtung nach Anspruch 16, dadurch gekennzeichnet, daß der Mitnehmer (22) einen schräg verlaufenden Hakenabschnitt umfaßt.

19. Vorrichtung nach einem der vorangehenden Ansprüche, dadurch gekennzeichnet, daß das erste Rahmenteil als ein Gehäuse (12) ausgebildet ist, aus dem das zweite, als Schieber (14) ausgebildete Rahmenteil durch eine Gehäuseöffnung herausziehbar ist.

20. Vorrichtung nach Anspruch 19, dadurch gekennzeichnet, daß der Mitnehmer (22) an der der Gehäuseöffnung zugekehrten Kante des Einzelblattes (188) angreifend angeordnet ist.

21. Vorrichtung nach einem der vorangehenden Ansprüche, dadurch gekennzeichnet, daß der Mitnehmer (22) mit dem Einzelblatt (188) federnd im Eingriff gehalten wird.

22. Vorrichtung nach Anspruch 21, gekennzeichnet durch Mittel zum Inaktivieren des Mitnehmers in Abhängigkeit von der Relativlage der Rahmenteile.

23. Vorrichtung nach einem der vorangehenden Ansprüche, dadurch gekennzeichnet, daß die erste Halteeinrichtung (26, 28) in dem von der zweiten Halteeinrichtung (20) durchlaufenen Bereich wirksam ist.

24. Vorrichtung nach einem der vorangehenden Ansprüche, dadurch gekennzeichnet, daß der Mitnehmer (22) und/oder die erste Halteeinrichtung (26/28) und/oder die zweite Halteeinrichtung (20) symmetrisch bezüglich einer in Richtung der Rahmenteilbewegung verlaufenden Symmetrieebene ausgebildet sind.

25. Vorrichtung nach Anspruch 19, dadurch gekennzeichnet, daß das Gehäuse (12) mit einem Sichtfenster (35) versehen ist, durch das bei eingeschobenem Schieber (14) ein oberstes Blatt des Stapels exponiert ist.

26. Vorrichtung nach Anspruch 25, gekennzeichnet durch eine im Gehäuse angebrachte Andruckeinrichtung (24, 32), die bei eingeschobenem Schieber (14) den Stapel gegen das Sichtfenster (35) drückt.

27. Vorrichtung nach einem der vorangehenden Ansprüche, dadurch gekennzeichnet, daß die zweite Halteeinrichtung einen Separatorsteg (20) umfaßt, der sich quer zur Bewegungsrichtung der Rahmenteile erstreckt.

28. Vorrichtung nach Anspruch 11 und 27, dadurch gekennzeichnet, daß die Rolle (28) im Separatorsteg gelagert ist.

29. Vorrichtung nach Anspruch 12 und 28, dadurch gekennzeichnet, daß die Rolle (28) und die Bahn (134, 26) federnd aufeinander zu vorgespannt sind.

30. Vorrichtung nach Anspruch 18, dadurch gekennzeichnet, daß der Hakenabschnitt (22) eine wirksame Eingriffshöhe aufweist, die größer ist als der Dicke eines Blattes entspricht, und daß er unter Druck durch Blätter des Reststapels ausweichend ausgebildet ist, so daß diese Blätter passieren können.

31. Vorrichtung nach Anspruch 16, dadurch gekennzeichnet, daß der Mitnehmer aus einem kompressiblen Material besteht, das sich unter Federvorspannung um die Kante des Einzelblattes schmiegt und auch im Eingriff mit dessen dem Stapel abgekehrter Fläche steht.

32. Vorrichtung nach Anspruch 21, dadurch gekennzeichnet, daß der Mitnehmer (212, 222) auf einer Tragschiene (214) angeordnet ist, die von einer am ersten Rahmenteil abgestützten Feder (24) vorgespannt ist.

33. Vorrichtung nach Anspruch 32, dadurch gekennzeichnet, daß sich die Tragschiene (214) parallel zur Bewegungsrichtung der Rahmenteile (12, 14) erstreckt.

34. Vorrichtung nach Anspruch 32 oder 33, dadurch gekennzeichnet, daß sich der Mitnehmer (212, 222) nahe einem Ende der Tragschiene (214) befindet.

35. Vorrichtung nach einem der Ansprüche 32 bis 34, dadurch gekennzeichnet, daß die Tragschiene (214) ein Element der ersten Halteeinrichtung trägt.

**Claims**

1. A device for the cyclic rearrangement of a pile of rectangular or square sheets, especially a pile of photographic prints, with a first (12) and a second (14) frame part which are movable relative to one another and parallel to the main plane of the pile, and with means which, on movement of the frame parts towards and away from one another, remove an individual sheet (188) at one end of the pile and add it to the other end of the pile again, these means comprising :

(a) a separating means to separate the individual sheet from the pile,

(b) a feeding means to feed sheets to the separating means,

(c) a first retaining means to hold the individual sheet in the first frame part and a second retaining means to hold the remainder of the pile in the second frame part, and

(d) a guide means to guide the separated individual sheet for the purpose of returning it to the other end of the remainder of the pile, characterized in that, as feeding means, there is provided a transporter (22, 404, 420) engaging the sheet to be separated at its rear edge in the direction of transport, whereas as the first retaining means there is provided at least one additional element (26/28, 32/80, 506/520, 300/306, 278, 32/288, 274) and the transporter remains in engagement with this edge at least until the first retaining means is effective.

2. A device according to claim 1, characterized in that the first retaining means (26/28) is constructed to engage both faces of the individual sheet (188).

3. A device according to claim 2, characterized in that the first retaining means comprises a pincer-like arrangement (506/266) provided in the first frame part (12).

4. A device according to claim 3, characterized in that the closing and opening of the pincer-like arrangement (506/266) is controlled by the relative movement of the frame parts (12, 14).

5. A device according to one of claims 3 or 4, characterized by a pincer member (506) movable relative to the first frame part and a pincer member (266) fixedly arranged in the first frame part.

6. A device according to claim 5, characterized in that the relatively movable pincer member is arranged to engage the side of the individual sheet that faced the remainder of the pile prior to the separation.

7. A device according to claim 5, characterized in that the relatively movable pincer member (294 in Fig. 21) is arranged to engage the side of the individual sheet (288) that faced away from the remainder of the pile prior to the separation.

8. A device according to claim 7, characterized in that the transporter (22) is arranged on a first spring arm (24) which presses against the pile, and the relatively movable pincer member is formed by a second spring arm (32) which cooperates with a gripping area provided on the first frame part (12).

9. A device according to claim 8, characterized in that both spring arms form a one-piece component.

10. A device according to claim 8 or 9, characterized in that both spring arms, controlled by the relative movement of the frame parts (12, 14) can be brought into and out of engagement with the individual sheet (188).

11. A device according to claim 2, characterized in that the first retaining means comprises a roller (28) arranged in the second frame part and running on the individual sheet at a circumferential speed the same as the relative speed of the frame parts (12, 14), which roller holds the individual sheet (188) in engagement with a counter-element (26).

12. A device according to claim 11, characterized in that the counter-element (134) comprises a strip fixedly arranged in the first frame part.

13. A device according to claim 11, characterized in that the counter-element comprises a second roller (306) arranged in the second frame part (14), and one of the rollers is driven by the relative movement of the frame parts.

14. A device according to one of the preceding claims, characterized in that the transporter (460) is an integral component of the first frame part (12).

15. A device according to one of claims 1 to 13, characterized in that the transporter (22) forms a part of the pressing arrangement (24, 32) that presses the pile towards a viewing window (35) when the two frame parts (12, 14) are in the pushed together position.

16. A device according to one of the preceding claims, characterized in that the transporter (22, 460) is of hook-like construction.

17. A device according to claim 16, characterized in that the transporter has an effective height of engagement that corresponds at maximum to the thickness of one sheet.

18. A device according to claim 16, characterized in that the transporter (22) comprises an obliquely extending hooked portion.

19. A device according to one of the preceding claims, characterized in that the first frame part is constructed as a housing (12) from which the second frame part, constructed as a slider member (14), can be withdrawn through a housing opening.

20. A device according to claim 19, characterized in that the transporter (22) is arranged to engage the edge of the individual sheet (188) facing towards the housing opening.

21. A device according to one of the preceding claims, characterized in that the transporter (22) is held in resilient engagement with the individual sheet (188).

22. A device according to claim 21, characterized by means for disabling the transporter in dependence on the relative position of the frame parts.

23. A device according to one of the preceding claims, characterized in that the first retaining means (26, 28) is effective in the region through which the second retaining means (20) passes.

24. A device according to one of the preceding claims, characterized in that the transporter (22) and/or the first retaining means (26/28) and/or the second retaining means (20) are constructed symmetrically with respect to a plane of symmetry extending in the direction of the movement of the frame parts.

25. A device according to claim 19, characterized in that the housing (12) is provided with a viewing window (35) through which an uppermost sheet of the pile is exposed when the slider member (14) is in the inserted position.

26. A device according to claim 25, characterized by a pressing arrangement (24, 32) arranged in the housing which presses the pile towards the viewing window (35) when the slider member (14) is in the inserted position.

27. A device according to one of the preceding claims, characterized in that the second retaining means comprises a separator bar (20) that extends transversely to the direction of movement of the frame parts.

28. A device according to claim 11 and 27, characterized in that the roller (28) is mounted in the separator bar.

29. A device according to claim 12 and 28, characterized in that the roller (28) and the strip (134, 26) are biased resiliently towards one another.

30. A device according to claim 18, characterized in that the hooked portion (22) has an effective height of engagement that is greater than the thickness of one sheet, and it is constructed to yield under the pressure of the sheets of the remainder of the pile so that these sheets are able to pass over it.

31. A device according to claim 16, characterized in that the transporter consists of compressible material that under spring bias lies closely around the edge of the individual sheet and also engages with the face thereof remote from the pile.

32. A device according to claim 21, characterized in that the transporter (212, 222) is arranged on a carrier rail (214), which is biassed by a spring (24) supported on the first frame part.

33. A device according to claim 32, characterized in that the carrier rail (214) extends parallel to the direction of movement of the frame parts (12, 14).

34. A device according to claim 32 or 33, characterized in that the transporter (212, 222) is located close to one end of the carrier rail (214).

35. A device according to one of claims 32 to 34, characterized in that the carrier rail (214) carries an element of the first retaining means.

**Revendications**

1. Dispositif de reclassement cyclique d'une pile de feuilles rectangulaires ou carrées, notamment d'une pile de clichés photographiques, comportant un premier élément en forme de cadre (12) et un second élément en forme de cadre (14), qui sont déplaçables l'un par rapport à l'autre et parallèlement au plan principal de la pile, et des moyens qui, dans le cas d'un déplacement en va-et-vient des éléments en forme de cadres, prélèvent une feuille individuelle (188) sur une face de la pile et la renvoient à l'autre face de la pile, lesquels moyens comprennent :

(a) un dispositif de séparation servant à séparer la feuille individuelle de la pile,

(b) un dispositif d'amenée servant à amener des feuilles au dispositif de séparation,

(c) un premier dispositif de retenue servant à retenir la feuille individuelle séparée dans le premier élément en forme de cadre et un second dispositif de retenue servant à maintenir la pile restante dans le second élément en forme de cadre, ainsi que

(d) un dispositif de guidage servant à guider la feuille individuelle séparée en vue de la renvoyer sur l'autre face de la pile restante, caractérisé en ce qu'il est prévu, comme dispositif d'amenée, un organe d'entraînement (22, 404, 420) s'engageant derrière le bord arrière, dans la direction d'entraînement, de la feuille individuelle devant être séparée, tandis qu'il est prévu, comme premier dispositif de retenue, au moins un élément supplémentaire (26/28, 32/80, 506/520, 300/306, 278, 32/288, 274 et en ce que l'organe d'entraînement reste en prise avec ce bord au moins jusqu'à ce que le premier dispositif de retenue soit actif.

2. Dispositif selon la revendication 1, caractérisé en ce que le premier dispositif de retenue (26/28) est agencé de manière à s'accrocher sur les deux faces de la feuille individuelle (188).

3. Dispositif selon la revendication 2, caractérisé en ce que le premier dispositif de retenue comporte un dispositif en forme de pince (506/266) prévu dans le premier élément en forme de cadre (12).

4. Dispositif selon la revendication 3, caractérisé en ce que l'ouverture et la fermeture du dispositif en forme de pince (506/266) est commandé par le déplacement relatif des éléments en forme de cadres (12, 14).

5. Dispositif selon l'une des revendications 3 ou 4, caractérisé par un organe en forme de pince (506) déplaçable par rapport au premier élément en forme de cadre et un élément en forme de pinces (266) monté fixe dans le premier élément en forme de cadre.

6. Dispositif selon la revendication 5, caractérisé en ce que l'élément en forme de pince, qui est mobile selon un déplacement relatif, peut être appliqué contre le côté de la feuille individuelle, qui était tourné vers la pile restante, avant la séparation.

7. Dispositif selon la revendication 5, caractérisé en ce que l'élément en forme de pince (294 sur la figure 21) qui est mobile selon un déplacement relatif, peut être appliqué contre le côté de la feuille individuelle (288), qui était tourné à l'opposé de la pile restante avant la séparation.

8. Dispositif selon la revendication 7, caractérisé en ce que l'organe d'entraînement (22) est monté sur une première branche (24) d'un ressort, qui applique une pression à la pile, et en ce que l'élément en forme de pince, qui est mobile selon un déplacement relatif, est formé par une seconde branche (32) du ressort, qui coopère avec une surface de serrage prévue sur le premier élément en forme de cadre (12).

9. Dispositif selon la revendication 8, caractérisé en ce que les deux branches du ressort forment un composant monobloc.

10. Dispositif selon la revendication 8 ou 9, caractérisé en ce que les deux branches du ressort peuvent être amenées à s'accrocher à la feuille individuelle (188) et à s'en décrocher, sous l'effet du déplacement relatif des éléments en forme de cadres (12, 14).

11. Dispositif selon la revendication 2, caractérisé en ce que le premier dispositif de retenue comporte un galet (28), qui est monté dans le second élément en forme de cadre, se déplace sur la feuille individuelle avec une vitesse circonférentielle égale à la vitesse relative des éléments en forme de cadres (12, 14) et qui maintient, conjointement avec un élément antagoniste (26), la feuille individuelle (188) à l'état serré.

12. Dispositif selon la revendication 11, caractérisé en ce que l'élément antagoniste (134) comporte une piste installée de façon fixe dans le premier élément en forme de cadre.

13. Dispositif selon la revendication 11, caractérisé en ce que l'élément antagoniste comporte un second galet (306) monté dans le second élément en forme de cadre (14) et en ce que l'un des galets est entraîné sous l'effet du déplacement relatif des éléments en forme de cadres.

14. Dispositif selon l'une des revendications précédentes, caractérisé en ce que l'organe d'entraînement (460) fait partie intégrante du premier élément en forme de cadre (12).

15. Dispositif selon l'une des revendications 1 à 13, caractérisé en ce que l'organe d'entraînement (22) fait partie d'un dispositif de pression (24, 32), qui, lorsque les éléments en forme de cadres (12, 14) sont emboîtés l'un dans l'autre, repousse la pile contre un voyant.

16. Dispositif selon l'une des revendications précédentes, caractérisé en ce que l'organe d'entraînement (22, 460) est en forme de crochet.

17. Dispositif selon la revendication 16, caractérisé en ce que l'organe d'entraînement possède une hauteur active d'accrochage, qui correspond au maximum à l'épaisseur d'une feuille.

18. Dispositif selon la revendication 16, caractérisé en ce que l'organe d'entraînement (22) comporte une section de crochet disposée obliquement.

19. Dispositif selon l'une des revendications précédentes, caractérisé en ce que le premier élément en forme de cadre est réalisé sous la forme d'un boîtier (12), hors duquel on peut extraire le second élément en forme de cadre agencé sous la forme d'un tiroir (14), à travers une ouverture du boîtier.

20. Dispositif selon la revendication 19, caractérisé en ce que l'organe d'entraînement (22) est disposé de manière à pouvoir s'accrocher sur le bord, tourné vers l'ouverture du boîtier, de la feuille individuelle (188).

21. Dispositif selon l'une des revendications précédentes, caractérisé en ce que l'organe d'entraînement (22) est maintenu accroché élastiquement à la feuille individuelle (188).

22. Dispositif selon la revendication 21, caractérisé par des moyens servant à rendre inactif l'organe d'entraînement en fonction de la position relative des éléments en forme de cadres.

23. Dispositif selon l'une des revendications précédentes, caractérisé en ce que le premier dispositif de retenue (26, 28) est actif dans la zone parcourue par le second dispositif de retenue (20).

24. Dispositif selon l'une des revendications précédentes, caractérisé en ce que l'organe d'entraînement (22) et/ou le premier dispositif de retenue (26/28) et/ou le second dispositif de retenue (20) sont agencés de manière à être symétriques par rapport à un plan de symétrie s'étendant dans la direction du déplacement des éléments en forme de cadres.

25. Dispositif selon la revendication 19, caractérisé en ce que le boîtier (12) comporte un voyant (35), à travers lequel la feuille la plus élevée de la pile est visible lorsque le tiroir (14) est à l'état inséré.

26. Dispositif selon la revendication 25, caractérisé par un dispositif de pression (24, 32), qui est disposé dans le boîtier et repousse la pile contre le voyant (35), lorsque le tiroir (14) est à l'état inséré.

27. Dispositif selon l'une des revendications précédentes, caractérisé en ce que le second dispositif de retenue comporte une barrette formant séparateur (20), qui s'étend transversalement par rapport à la direction de déplacement des éléments en forme de cadres.

28. Dispositif selon les revendications 11 et 27, caractérisé en ce que le galet (28) est tourillonné dans la barrette formant séparateur.

29. Dispositif selon les revendications 12 et 28, caractérisé en ce que le galet (28) et la piste (134, 26) sont précontraints élastiquement l'un contre l'autre.

30. Dispositif selon la revendication 18, caractérisé en ce que la section de crochet (22) possède une hauteur active d'accrochage, qui est supérieure à ce qui correspond à l'épaisseur d'une feuille et en ce que cette section de crochet est agencée de manière à s'écarter sous l'action de la pression produite par des feuilles de la pile restante de sorte que ces feuilles peuvent circuler.

31. Dispositif selon la revendication 16, caractérisé en ce que l'organe d'entraînement est réalisé en un matériau compressible, qui s'applique autour du bord de feuille individuelle, sous l'action d'une précontrainte élastique, et est également en prise avec la surface de cette feuille, tournée à l'opposé de la pile.

32. Dispositif selon la revendication 21, caractérisé en ce que l'organe d'entraînement (212, 222) est disposé sur un rail de support (214), qui est précontraint au moyen d'un ressort (24) prenant appui sur le premier élément en forme de cadre.

33. Dispositif selon la revendication 32, caractérisé en ce que le rail de support (214) s'étend parallèlement à la direction de déplacement des éléments en forme de cadres (12, 14).

34. Dispositif selon la revendication 32 ou 33, caractérisé en ce que l'organe d'entraînement (212, 222) est situé à proximité d'une extrémité du rail de support (214).

35. Dispositif selon l'une des revendications 32 à 34, caractérisé en ce que le rail de support (214) porte un élément du premier dispositif de retenue.

FIG.1

FIG.2

FIG.3

FIG. 4

FIG. 5

FIG. 6

FIG. 7

FIG. 8

FIG. 9

FIG. 10

FIG. 11

FIG. 12

FIG. 13

FIG.14

FIG.16

FIG.15

FIG.17

FIG.18

FIG.19

FIG.20

EP 0 204 757 B1

FIG. 21

EP 0 204 757 B1

FIG. 23

FIG. 22

FIG. 24

8

FIG. 25

FIG. 26

FIG. 27

EP 0 204 757 B1

FIG. 28

FIG. 29

EP 0 204 757 B1

FIG. 30

FIG. 31

FIG. 32

FIG. 33

FIG. 34

FIG. 35

FIG. 36

EP 0 204 757 B1

FIG. 37

FIG. 38

FIG. 39

FIG. 40

EP 0 204 757 B1

## FIG. 41

## FIG. 42

FIG. 43

FIG. 44

FIG. 45

EP 0 204 757 B1

FIG.46

FIG.47

EP 0 204 757 B1